Europäisches Patentamt

European Patent Office

Office européen des brevets

(11) Publication number: **0 213 539**
**B1**

# EUROPEAN PATENT SPECIFICATION

(45) Date of publication of patent specification: **31.10.90**

(21) Application number: **86111447.8**

(22) Date of filing: **19.08.86**

(51) Int. Cl.⁵: **H 04 N 1/12, H 04 N 1/18**

(54) **Picture reading apparatus.**

(30) Priority: **20.08.85 JP 181128/85**

(43) Date of publication of application:
**11.03.87 Bulletin 87/11**

(45) Publication of the grant of the patent:
**31.10.90 Bulletin 90/44**

(84) Designated Contracting States:
**DE FR GB**

(56) References cited:
**DE-A-3 318 189**

**PATENT ABSTRACTS OF JAPAN, vol. 7, no. 218
(E-200)1363r, 28th September 1983 & JP-A-58
108 862**

**PATENT ABSTRACTS OF JAPAN, vol. 7, no. 144
(E-183)1289r, 23rd June 1983 & JP-A-58 57 856
IBM TECHNICAL DISCLOSURE BULLETIN, vol.
17, no. 12, May 1975, page 3746, New York, US;
D.L. POTAK: "Microfilm scanning system"**

(73) Proprietor: **Dainippon Screen Mfg. Co., Ltd.**
**1-1, Tenjinkitamachi Teranouchi-Agaru 4-chome
Horikawa-Dori
Kamikyo-ku Kyoto 602 (JP)**

(72) Inventor: **Morizumi, Yoshiaki DAINIPPON
SCREEN MFG. CO., LTD.
1-1, Tenjinkitamachi Teranouchi-Agaru 4-chome
Horikawa Dori Kamikyo-ku Kyoto (JP)**

(74) Representative: **WILHELMS, KILIAN & PARTNER
Patentanwälte
Eduard-Schmid-Strasse 2
D-8000 München 90 (DE)**

(56) References cited:
**IBM TECHNICAL DISCLOSURE BULLETIN, vol.
20, no. 1, June 1977, page 18, New York, US;
D.L. JANEWAY et al.:"Multiple diode apray
optics"**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

Background of the Invention

The present invention relates to a picture reading apparatus which, by projecting an original picture on a photoelectrical element(s), reads out picture information of the original picture, and particularly relates to a device which improves resolving power in the case of reading out information of the original picture by scanning the original picture in line sequence by using a line sensor or more than one line sensors composed of a plurality of photoelectric elements aligned linearly.

In order to improve resolving power of a picture reading apparatus which applies a line sensor(s), it is a matter of course to increase the number of photoelectric elements comprising the line sensor, however, there is a limit to the increase of the number the photoelectric elements. Accordingly, there have been proposed various kinds of means for obtaining more excellent resolving power by using a line sensor having relatively small number of photoelectric elements.

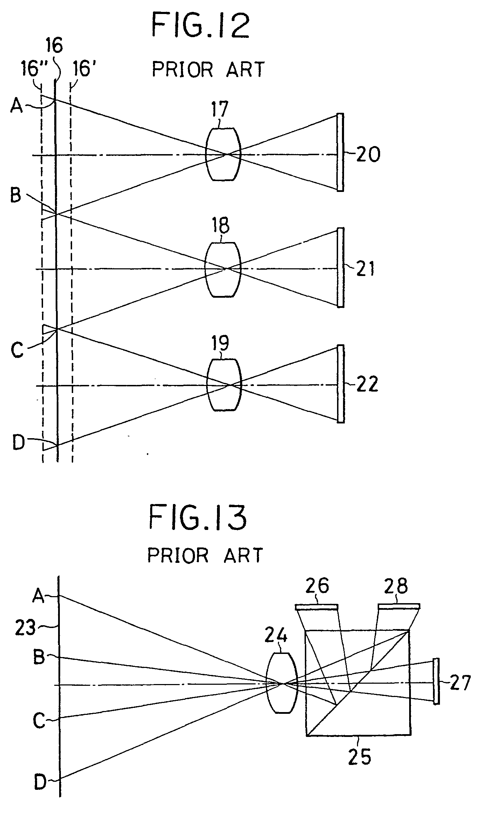

For example, means shown in Fig. 12 is composed of a plurality of sets of projecting optical systems and a plurality of line sensors. In the means there are provided three lenses 17, 18 and 19 of the same standard in parallel with the surface of an original picture 16, and an image of the original picture 16 is divided into three and each of the divided picture images is projected to focus on each of line sensors 20, 21 and 22 which outputs a picture image signal, respectively. In this case each of the sensors divides desired whole area of the original picture 16 into three equal areas. Then, onto the line sensor 20 images of from an A area to that of B of the original picture are projected, onto the line sensor 21 images of the area B to an area C of the original picture 16 are projected, and onto the line sensor 22 images of the C to an area D are also projected. Accordingly, resolving power is improved up to three times compared with that of a case in which the whole areas from the A to the D are reducedly projected onto one line sensor.

In addition, it is also considered that only one set of the projecting optical system is used, an optical system is used, an optical path is separated to two optical paths by using a half mirror to divide the area of the original picture into two equal parts, and then by projecting each of the divided areas onto the respective line sensors, excellent resolving power nearly two times than that of the usual case may be obtained.

Next, in Fig. 13 there is an example in which a projecting lens 24 and a plurality of line sensors 26, 27 and 28 are used. Between the projecting lens 24 and each of the sensors a half prism 25 is disposed to divide a light flux which transmits the lens 24, and emits each of the divided light fluxes to the respective line sensors. In this case also the whole desired area of the original picture 23 is equally divided into three parts, and each of areas AB, BC or CD is projected onto the respective line sensors. In this case resolving power of three times than usual one is obtained.

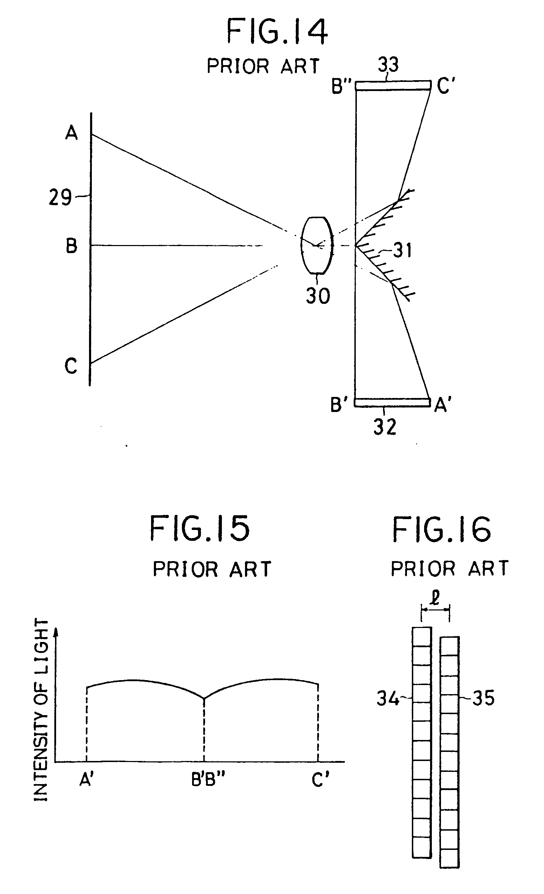

Further, there has been also proposed a means shown in Fig. 14. In this means at the rear stage of a lens 30, a dome shape mirror 31 is provided to divide the light flux into two light fluxes, and emits them to the line sensors 32 and 33, respectively. In this means a desired area of the original picture 29 is divided into two parts AB and BC to improve resolving power up to two times of the usual one. In addition, as a means for improving resolving power without dividing light flux there has been known a device, as shown in Fig. 16, which comprises a plurality of line sensors 34 and 35 which are disposed in parallel by slipping off in phase. In this device it is adapted that images of the linear area of the original picture are shifted to a direction of the line sensors being disposed in parallel, and picture information in the identical area is read out with a plurality of the line sensors. In the device each of unit element is disposed so that respective phases is slipped off with one another, which results in that each of output information of the line sensors is mutually interpolated. As can be judged from the above, composite resolving power is improved in response to the number of line sensors having been used.

Each of the devices according to the above described prior art has practical disadvantages, respectively. In the means shown in Fig. 12 in which a plurality sets of lenses and line sensors are used, actually there is extreme difficulty to prepare desired number of lenses which are completely same in focal length even if the lenses are of the same standard, for there is unevenness in focal length within the range of tolerance during manufacturing processes. Accordingly, in the practical device lenses having relatively close focal lengths are selected to be used. In that case, as a distance between the lenses and the surface of the original picture, a value like a G.C.D. (the greatest common divisor) of each of values determined by basing on each of focal lengths of respective lenses according to desired magnification is to be selected, so that out of focusing phenomenon is apt to occur.

Next, the device shown in Fig. 13 uses only a lens, so that there is no disadvantage as described the above, however, between the lens and each of the line sensors there is provided the half prism 25, so that efficiency of the optical system is restricted with aberration of the half prism 25, and further in order to take in, that is, emit a light flux to the line sensors radiated from the whole desired areas of the original picture, it is required that considerably larger size of the half prism 25 is selected, which results in difficulty in manufacture and too expensive.

There is also another idea to use a flat half mirror instead of using the half prism, however, in the flat half mirror there generates a difference in lengths of light path between the reflecting surface of the half mirror and the focusing plane and that of between the transmitting surface of the half mirror and the focusing plane, so that there is required some correcting means for solving the difference, for example, one of them is that, by neglecting a certain extent of slippage of focusing, the line line sensors are disposed at positions where the identical magnification can be obtained, or the other is as follows, that is, in the means parallel flat plane glasses are disposed at desired positions in the light path divided by the half mirror to correct the difference. In addition, in the case of using a thin half mirror, for example, an opaque film having been appropriately coated with transparent film by which the difference in length between the light paths can substantially neglect lowers its flatness in response to increase of the size thereof, which results in occurring distortion in picture images, and further there are other disadvantages in causing flaws and difficulty in maintenance.

In the prior device shown in Fig. 14 there is a problem of causing partial unevenness of light quantity. With respect to this problem there is a Japanese Patent Application No. 60—73582 (Title of invention is "AN APPARATUS FOR CORRECTING UNEVENNESS OF LIGHT QUANTITY IN AN OPTICAL REPRODUCTION SYSTEM") by the same inventor and the same Applicant in which minute description is given, accordingly, only outline thereof will be described in this specification. That is, in the device if it is considered that line quantity emitted to the two line sensors 32 and 33, light flux from the B point on the original picture 29 positioned on the optical axis of the lens 30 is divided into two light fluxes, and emitted to B' or B'' on the two line sensors, on the other hand other light fluxes from the both ends A or C of the original picture are the whole light quantity having transmitted the lens or nearly same light quantity having emitted to an A' or a C', so that light receiving quantity of the line sensors becomes discrete light quantity distribution as that of shown in Fig. 15. Further, the device shown in Fig. 16 must be adapted that in order to project the identical picture image area sequentially by a plurality of line sensors, a picture image signal output from the preceding line sensor is once stored in memory means and synchronized with a picture image signal output from the following sensor, and read out to compose them.

From IBM Technical Disclosure Bulletin, Vol. 20, No. 1, June 1977, pp. 18, 19, there is known an illumination system with a multiple diode array optics, in which each of the diode arrays forming the detector receives, from a linear area of the original picture, a portion of the light transmitted through the projecting lens that is obtained by dividing the image beam along planes which are perpendicular to the original line area.

## Summary of the Invention

It is an object of the present invention to provide an improved picture reading apparatus for reading out picture images in a linear area of an original picture by projecting with a projecting lens the picture onto the surfaces of a plurality of line sensors.

The invention is as claimed in claim 1.

The present invention is adapted that, when a picture image of a linear area to be read out of an original picture is projected and focused on a plurality of line sensors, a light flux at the rear stage of a projecting lens is divided into two light fluxes with a plane containing the linear area of the original picture and an optical axis of the lens, and thus the light dividing means is disposed at the rear stage of the projecting lens so that each of the divided two light fluxes may be projected and focused on respective line sensors. As a light dividing means, one or two flat mirrors which are disposed so that one end of it or of them may coincide with or approach to the plane which divides the light flux into two fluxes, and a reflecting plane or reflecting planes of which are inclined at desired angle(s) with respect to the optical axis of the projecting lens.

The light flux passing through the projecting lens is divided into two light fluxes by the plane containing the linear area to be read out of the original picture and the optical axis of the lens with the flat mirror, and projects and focuses respectively to each of the line sensors. In the case since the flat mirror is a mirror of the surface reflecting type, there is no difference in length between both light paths different from the case of a half mirror, so that the identical focusing condition can be obained. Further, at any part of the focusing plane emitted light flux is a half of the whole light flux having transmitted the lens. Thus, preferable focusing condition free from unevenness of light quantity can be obtained.

## Brief Description of the Drawings

Fig. 1 is a perspective view showing an outline of one embodiment of an apparatus according to the present invention;

Fig. 2 is a diagram showing section of a projecting light flux in the apparatus shown in Fig. 1;

Fig. 3 is a view of graphs showing distribution of light quantity;

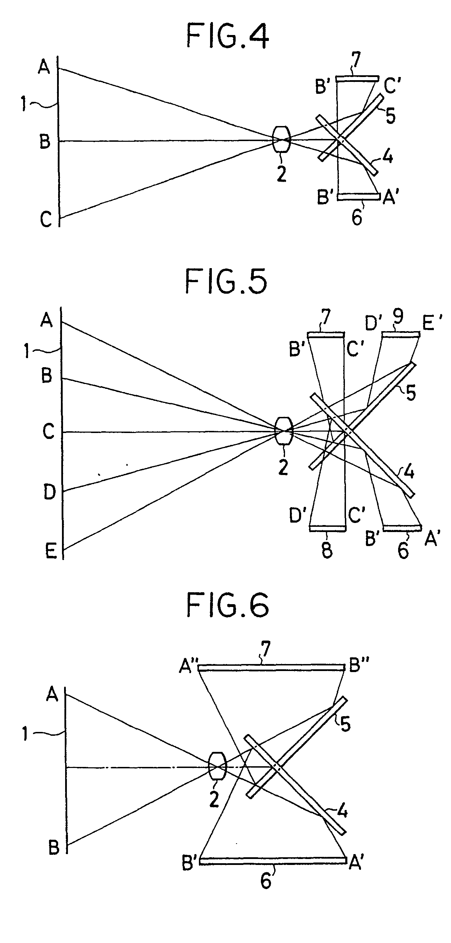

Each of Figs. 4, 5, 6, 7, 8, 9, 10 and 11 is a view showing respective outlines of other embodiments of the present invention;

Each of Figs. 12, 13, 14 and 16 is a view showing conventional apparatus, respectively; and

Fig. 15 is a graph showing distribution of light quantity of the apparatus shown in Fig. 14.

## Detailed Description of the Invention and Preferred Embodiments

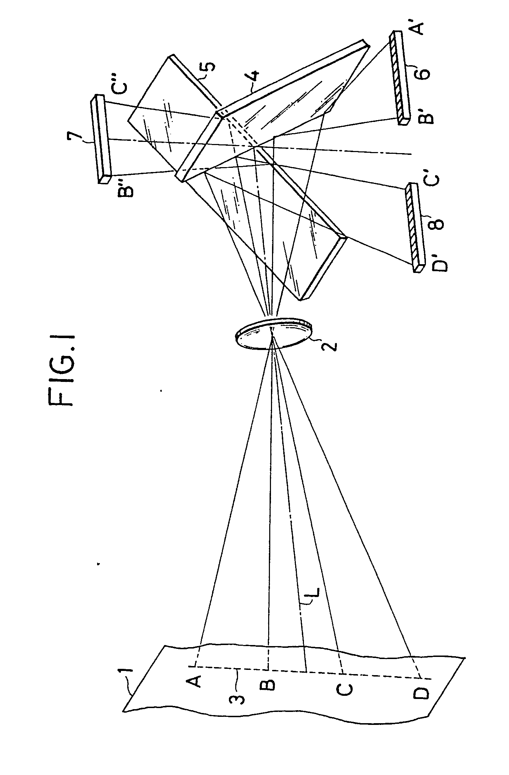

Fig. 1 is a perspective view showing an outline of the apparatus of the present invention. A lens 2 is oppositely disposed to an original picture 1, and picture images on a linear area 3 to be read out of the original picture 1 are projected and focused onto three line sensors 6, 7 and 8 through two flat mirrors 4 and 5. The flat mirrors 4 and 5 are separated into two parts with a plane (hereinafter refer to "dividing plane") which contains the linear area 3 and an optical axis L of the lens 2, and they are mutually inclined to the inverse directions at angle 45 degree with respect to the linear area 3, and they are disposed so that a crossing point at which they intersect with each other in cross-shaped form on the optical axis of the lens 2. Accordingly, the light flux transmitted through the lens 2 is divided into two light fluxes, and one of them is reflected on the surface of the mirror 4 and makes a focusing image on the surface of a line sensor located at a lower position. The other light flux is reflected on the surface of the mirror 5, and focuses on the surface of a line sensor located at the upper position. That is, among each of areas obtained by dividing the linear area 3 into three equi-length an area [AB] is projected onto the line sensor 6 and focuses thereon, an area [BC] is projected onto the line sensor [7] and focuses thereon, and the remaining area [CD] is projected and focuses to the line sensor [8], respectively.

In this case, to each of the line sensors one of the light fluxes divided into two light fluxes at the optical axis position is projected, so that light receiving quantity of each of the line sensors becomes $\frac{1}{2}$ of the light quantity of the case when the whole light flux which transmitted through the lens 2 is projected. Further, if the end surface of each of the mirrors reaches at the dividing plane, irregular reflection occurs at that part, which is liable to lower in contrast causing by flare light, so that in practical reflection prevention processings, such as painting etc., are performed, and it is preferable that between the two mirrors an appropriate space is made. In this case though the effective reflecting surface reduces and light receiving quantity of each of the light sensors becomes smaller, however, such extent of reduction in light quantity gives no effect to practical use.

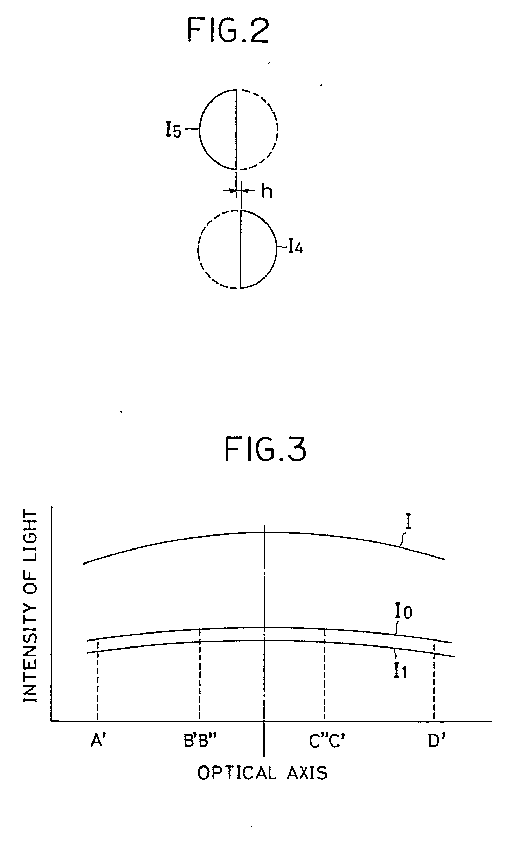

Fig. 2 shows the above-described conditions diagrammatically in which a circle including a dot line represents the whole light flux to a certain pixel point, and areas (I) and (I) in each of the dot lines indicates each of light fluxes reflected on the mirrors 4 and 5, respectively. That is, in the case of a gap of width [h] being provided between the two mirrors, unit light receiving quantity of each of the sensors is less than $\frac{1}{2}$ comparing with that of the directly received whole light flux which transmits the lens 2.

In Fig. 3 there are shown graphs indicating the above described lowering conditions of the light quantity, in which a curve [I] indicates the quantity of the whole light flux which transmits the lens 2, a curve [I] indicates distribution of the light quantity on the surface of the line sensor, and a curve [I] shows distribution of the light quantity in the case of there no countermeasure against the afore-mentioned flare light. However, these lowering in light quantity are not fatal to a picture reading apparatus, but, for example, by increasing illumination degree of a lighting which emits the original picture, or by increasing amplitude degree of an output signal from the line sensor, it can be compensated.

In the above described embodiment the two flat mirrors 4 and 5 are disposed so that they are inclined with respect to the optical axis L of the lens at angle of 45 degree mutually inverse directions, however, the angle is not limited to 45 degree, and any angle close thereto may be selected. That is, in the case of each of the line sensors being disposed in parallel to the optical axis L of the lens, two flat mirrors are disposed at an angle of 45 degree with to optical axis, but in the case of there being no necessity of each of the lien sensors to direct to the optical axis of the lens, inclination angle of the flat mirror may be selected any value. The afore-mentioned can be applied to any embodiments described hereinafter.

The above description is based on apparatus of the embodiment showing in Fig. 1, however, the scope of the present invention is not limited to this, but can be proposed various modifications. For example, in the above described embodiment the linear area of the original picture is divided into three equal areas so that each of them is projected and focused onto respective three line sensors, however, the number of division is not limited to three, but two, four or more than four may be selected. In Figs. 4 and 5 there are shown embodiments of these cases.

In Fig. 4 there is shown an embodiment in which a linear area of an original picture is divided into two through an optical system composed of the lens 2 and two flat mirrors 4 and 5, as shown in Fig. 1, and they are projected and focused onto two line sensors 6 and 7. Optical paths of them are similar to those of the conventional ones shown in Fig. 14. But in the case of the embodiment of the present invention, a light flux emitted to the line sensors is divided into two light fluxes at any positions by a plane which is parallel to the direction of the light flux advances (a plane which is parallel to the surface of this paper), so that in this embodiment there is less discreteness of distribution of light quantity in comparison with that of the conventional one shown in Fig. 14.

In Fig. 5 there is shown another embodiment of the present invention in which the linear area of the original picture 1 is divided into four through the same optical system, and are projected and focused onto four line sensors 6, 7, 8 and 9. In this embodiment it is possible to obtain resolving power of four times comparing with that of obtained in the case of the whole linear area from an A to an E positions being projected onto a single line sensor.

In addition, in Fig. 6 there is shown other embodiment in which the linear area on the original picture 1 is not divided, but through the afore-mentioned optical system is projected and focused onto two line sensors 6 and 7. In this embodiment resolving power of each of the line sensors is equivalent to each of their proper ones, but in this embodiment configuration of photoelectric elements in the two line sensors is changed so that each of phases of the photoelectric elements may be slipped off by $\frac{1}{2}$ pitch one another. That is, output signals of theirs can be synthesized, which results in obtaining substantially resolving power of twice in excellence. Further, in all of the afore-mentioned embodiments excepting the embodiment shown in Fig. 6, descriptions are given that a plurality of line sensors having the same length are used, and accordingly, the linear area of the original picture can be read out by dividing the area into the same areas, however, there is no necessity of dividing the area into the same areas, but line sensors of different lengths also may be used.

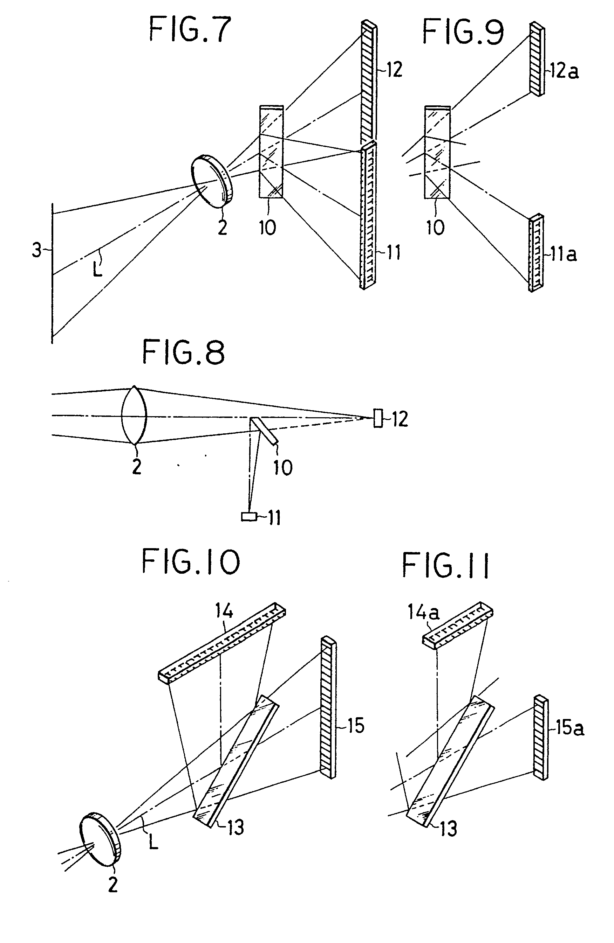

In all those embodiments shown in Figs. 1 to 6, two flat mirrors 4 and 5 are disposed at both sides of the dividing plane, however, the present invention is not limited to this, but in the present invention it is also possible to be a construction in which only a flat mirror is disposed at one side of the dividing plane. In Figs. 7 to 11 there are shown embodiments of them. In Fig. 7 there is shown an embodiment of the present invention in which a flat mirror 10 having a parallel surface to the linear area 3 of the original picture is disposed so that with its one end it may coincide with or approach to the dividing plane, and is inclined at a suitable angle to the optical axis L. According to this construction, as shown in Fig. 8, one side $\frac{1}{2}$ of the light flux is reflected on the surface of the flat mirror 10 and the remaining $\frac{1}{2}$ thereof directly advances to project and focus onto each of the line sensors 11 and 12. In this case it is preferable that an end portion of the light flux side of the flat mirror 10 is made to be a knife edge form according to inclination angle of the mirror so as to prevent the light flux being dispersed.

In the embodiment shown in Fig. 7, it is adapted that to the two sensors 11 and 12 the whole length of the linear area 3 of the orginal picture 1 may be projected, and by slipping off each of phases of photoelectric elements composing these line sensors by $\frac{1}{2}$ pitch with each other, resolving power of a synthesized output picture image is improved to twice of the usual one. In this case it is rather difficult to exactly regulate positions at which the line sensors are disposed, so that as shown in Fig. 9, each of two line sensors 11a and 12a is made of $\frac{1}{2}$ length of the afore-described ones to divide the picture area into two parts in the length direction for taking out picture information. It is practical to synthesize these taken out picture information.

In Fig. 10 the mirror 13 having the vertical surface to the dividing plane is approached to the dividing plane with its one end and inclined to the linear area of the original picture with a desired angle, and same as the means shown in Fig. 7, one side $\frac{1}{2}$ of the light flux reflects on the surface of the mirror 13, and the remaining side of the light flux advances directly to project and focus onto the line sensors 14 and 15, respectively.

In the embodiment, if, same as the case shown in Fig. 7, it is difficult to dispose the line sensors so that their phases is slipped off by $\frac{1}{2}$ pitch with each other, then by making each of lengths of line sensors 14a and 15a to half of theirs, respectively, the whole picture area can be projected $\frac{1}{2}$ by $\frac{1}{2}$ of the area. The inclination angle of the flat mirror 10 or 13 in the embodiments shown in Fig. 7 to Fig. 11 is not limited to 45 degree, but can be selected freely, and it is also possible to dispose it so that it may be inclined in two directions.

The effects and functions of the present invention are as follows:

(1) Without necessity of reducing unit size of photoelectric element which composes of a line sensor, resolving power of an output picture image can be improved;

(2) Irregularity of light quantity emitted to a line sensor(s) can be limited to the range of errors such as fall of light quantity around periphery etc. which generates essentially in an optical system and are those of permissible;

(3) As a mirror(s) to be used is a surface reflection type flat mirror which is manufactured and maintained with relatively easier means, it can be achieved with low cost;

(4) A good finished picture image of excellent quality having no distortion can be obtained; and

(5) Picture signals concerning the identical area of the original picture can be output simultaneously from a plurality of line sensors, so that there is no memory or lagging means etc. is unnecessary, different from the case of applying a plurality of line sensors being disposed in parallel.

## Claims

1. A picture reading apparatus for reading out a picture image in a linear area of an original picture, said picture reading apparatus comprising:

a projection lens for receiving light from the linear area of the original picture and transmitting said light through said lens, said lens having an optical axis, an object side and an image side;

a plurality of line sensors each having a plurality of linearly aligned photoelectronic elements respectively; and

a light dividing means disposed on the image side of said projection lens in a position to receive at least a portion of said light transmitted through said projecting lens, said light dividing means being effective for dividing said received light into a plurality of light beams and directing each of said light beams to respective ones of said line sensors, characterized in that:

the light flux of the beam composed of said light transmitted through said projecting lens is divided by said dividing means, along a line lying substantially within an optical plane containing said linear area and said optical axis whereby at least two subbeams are generated each of substantially half the light flux of said beam.

2. A picture reading apparatus for reading out a picture image in a linear area of an original picture according to claim 1, wherein said light dividing means includes two flat mirrors disposed on opposite sides of an imaginary plane which contains said linear area and said optical axis, each of said two flat mirrors is inclined relative to said linear area and said two flat mirrors are inclined in inversely opposed directions.

3. A picture reading apparatus according to claim 2 wherein the angle between each of said two flat mirrors and said linear area is substantially 45 degree.

4. A picture reading apparatus according to claim 3, wherein said two flat mirrors and said optical axis of said projecting lens have a common part in the direction perpendicular to said imaginary plane.

5. A picture reading apparatus according to claim 1, wherein a pair of line sensors generate an image signal corresponding to said picture image in the linear area of said original picture; and photoelectric elements alignments of said paired line sensors are respectively slipped off by $\frac{1}{2}$ pitch of an element in the alignment direction.

**Patentansprüche**

1. Bildlesevorrichtrung zum Auslesen eines Bildes in einem linearen Bereich einer Bildvorlage, wobei die Bildlesevorrichtung

eine Abbildungsoptik für einen Empfang von Licht aus dem linearen Bereich der Bildvorlage und ein Übertragen des Lichtes durch die Optik, wobei die Optik eine optische Achse, eine Dingseite und eine Bildseite hat,

eine Anzahl von Liniensensoren, von denen jeder eine Anzahl von linear ausgerichteten photoelektronischen Elementen aufweist, und

Lichtteilermittel, die auf der Bildseite der Abbildungsoptik an einer Stelle angeordnet sind, an der sie wenigstens einen Teil des durch die Abbildungsoptik übertragenen Lichts erhalten, wobei die Lichtteilermittel dahingehend wirksam sind, daß sie empfangenes Licht in eine Anzahl von Lichtbündeln aufteilen und jedes der Lichtbündel auf betreffende der Liniensensoren richten, umfaßt, dadurch gekennzeichnet, daß

der Lichtstrom des aus dem durch die Abbildungsoptik übertragenen Licht aufgebauten Bündels durch die Teilermittel längs einer Linie geteilt wird, die im wesentlichen in einer optischen Ebene liegt, die den linearen Bereich und die optische Achse enthält, wodurch wenigstens zwei Unterbündel erzeugt werden, von denen jedes im wesentlichen den halben Lichtfluß des Bündels hat.

2. Bildlesevorrichtung zum Auslesen eines Bildes in einem linearen Bereich einer Bildvorlage nach Anspruch 1, bei welchem die Lichtteilermittel zwei ebene Spiegel umfassen, die auf entgegengesetzten Seiten einer gedachten Ebene liegen, welche den linearen Bereich und die optische Achse enthält, wobei jeder der beiden ebenen Spiegel in Bezug auf den linearen Bereich geneigt ist und die beiden ebenen Spiegel in entgegengesetzt Richtungen geneigt sind.

3. Bildlesevorrichtung nach Anspruch 2, bei welcher der Winkel zwischen jedem der beiden ebenen Spiegel und dem linearen Bereich im wesentlichen 45 Grad beträgt.

4. Bildlesevorrichtung nach Anspruch 3, bei welcher die beiden ebenen Spiegel und die optische Achse der Abbildungsoptik einen gemeinsamen Teil in der Richtung senkrecht zur gedachten Ebene haben.

5. Bildlesevorrichtung nach Anspruch 1, bei welcher ein Paar von Liniensensoren ein Bildsignal erzeugen, welches dem Bild im linearen Bereich der Bildvorlage entspricht, und Ausrichtungen von photoelektrischen Elementen der paarweisen Liniensensoren um $\frac{1}{2}$ Elementabstand in Ausrichtungsrichtung versetzt sind.

**Revendications**

1. Un appareil de lecture d'image destiné à lire une configuration d'image dans une zone linéaire d'une image originale, ledit appareil de lecture d'image comprenant:

une lentille de projection pour recevoir une lumière provenant de la zone linéaire de l'image originale et transmettre ladite lumière à travers ladite lentille, ladite lentille comportant un axe optique, un côté objet et un côté image;

plusieurs capteurs linéaires comportant chacun plusieurs éléments photo-électroniques respectivement alignés de façon linéaire; et

un moyen diviseur de lumière disposé sur le côté image de ladite lentille de projection dans une position appropriée pour recevoir au moins une partie de ladite lumière transmise à travers ladite lentille de projection, lesdits moyens diviseurs de lumière agissant pour diviser ladite lumière reçue en plusieurs faisceaux lumineux et diriger chacun desdits faisceaux lumineux vers des capteurs respectifs parmi lesdits capteurs linéaires, caractérisé en ce que:

le flux lumineux du faisceau composé de ladite lumière transmis à travers ladite lentille de projection est divisé par lesdits moyens diviseurs, le long d'une ligne disposée sensiblement à l'intérieur d'un plan optique contenant ladite zone linéaire et ledit axe optique, grâce à quoi au moins deux sous-faisceaux sont engendrés, transmettant chacun sensiblement la moitié du flux lumineux dudit faisceau.

2. Un appareil de lecture d'image destiné à lire une configuration d'image dans une zone linéaire d'une image originale selon la revendication 1, dans lequel ledit moyen diviseur de lumière comprend deux miroirs plans disposés sur des côtés opposés d'un plan imaginaire qui contient ladite zone linéaire et ledit axe optique, chacun desdits deux miroirs plans est incliné par rapport à ladite zone linéaire et lesdits deux miroirs plans sont inclinés dans des directions opposées de façon inverse.

3. Un appareil de lecture d'image selon la revendication 2, dans lequel l'angle entre chacun desdits deux miroirs plans et la zone linéaire est sensiblement de 45 degrés.

4. Un appareil de lecture d'image selon la revendication 3 dans lequel lesdits deux miroirs plans et ledit axe optique de ladite lentille de projection possèdent une partie commune dans la direction perpendiculaire audit plan imaginaire.

5. Un appareil de lecture d'image selon la revendication 1 dans lequel une paire de capteurs linéaires engendrent un signal de configuration correspondant à ladite configuration d'image dans la zone linéaire de ladite image originale; et des alignements d'éléments photo-électriques desdits capteurs linéaires appariés sont respectivement décalés d'un demi-pas d'un élément dans la direction d'alignement.

FIG.1

# FIG.2

# FIG.3

# FIG.4

# FIG.5

# FIG.6

FIG.7

FIG.9

FIG.8

FIG.10

FIG.11

## FIG.12

### PRIOR ART

## FIG.13

### PRIOR ART

# FIG.14
PRIOR ART

# FIG.15
PRIOR ART

# FIG.16
PRIOR ART